# FASCICULE DE BREVET EUROPEEN

(11) **EP 1 602 256 B1**
(45) Date de publication et mention de la délivrance du brevet: **20.08.2008**
(21) Numéro de dépôt: 04716266.4
(22) Date de dépôt: 02.03.2004
(51) Int. Cl.: H04Q 7/38, H04L 12/56

(54) **PROCEDE POUR LA GESTION DE LA QUALITE DE SERVICE DANS UN SYSTEME DE COMMUNICATIONS MOBILES EN MODE PAQUET**
VERFAHREN ZUR DIENSTQUALITÄTSSTEUERUNG IN EINEM MOBILEN PAKETKOMMUNIKATIONSSYSTEM
METHOD OF MANAGING QUALITY OF SERVICE IN A PACKET-MODE MOBILE COMMUNICATION SYSTEM

(30) Priorité: 04.03.2003 FR 0302600
(43) Date de publication de la demande: 07.12.2005
(73) Titulaire: Alcatel Lucent, 75008 Paris (FR)
(72) Inventeur: PIERRE, Jean-Paul, F-92330 Sceaux (FR); ISSENMANN, Edouard, F-78150 Le Chesnay (FR)
(74) Mandataire: Korakis-Ménager, Sophie
(86) Numéro de dépôt international: PCT/FR2004/000486
(87) Numéro de publication internationale: WO 2004/082224

(56) Documents cités:
- WO-A-02/41592
- WO-A-99/48310
- "3GPP TS 23.107 V3.4.0;3rd Generation Partnership Project; Technical Specification Group Services and System Aspects; QoS concept and Architecture (Release 1999)" 3GPP TS 23.107 V3.4.0, XX, XX, octobre 2000 (2000-10), pages 1-35, XP002213783

## Description

La présente invention concerne d'une manière générale les systèmes de communications mobiles.

D'une manière générale, les systèmes de communications mobiles font l'objet de normalisation, et pour une description complète de ces systèmes on pourra se référer aux normes correspondantes, publiées par les organismes de normalisation correspondants.

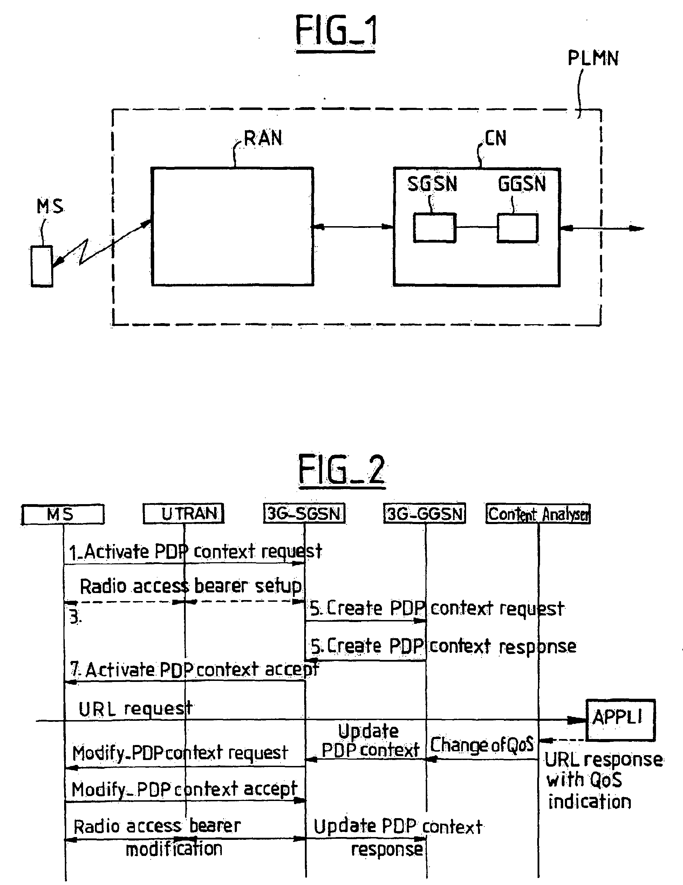

L'architecture générale d'un système de communications mobiles est brièvement rappelée en relation avec la figure 1. Le système comporte un réseau de communications mobiles ou PLMN (« Public Land Mobile Network ») comportant lui-même:
- un réseau d'accès radio, ou RAN (« Radio Access Network »), en charge essentiellement de fournir à des stations mobiles ou MS (« Mobile Station ») un accès radio à des services de communications mobiles,
- un réseau coeur, ou CN (« Core Network »), en charge essentiellement de la gestion des communications et de leur routage, notamment via des réseaux extérieurs (non illustrés sur cette figure).

On rappelle que dans ces systèmes, l'évolution des besoins et des technologies conduit à distinguer deux modes possibles : le mode circuit (non représenté sur la figure) et le mode paquet. Le mode paquet, contrairement au mode circuit, se caractérise par un partage dynamique en cours de session des ressources entre les utilisateurs, d'où une utilisation plus efficace des ressources disponibles, mais qui nécessite certains mécanismes de gestion de qualité de service (ou QoS, pour « Quality of Service ») pour garantir la qualité de service pour les utilisateurs.

L'architecture de réseau coeur pour le mode paquet est rappelée sur la figure 1 ; on distingue, notamment :
- des éléments de réseau de type SGSN («Serving GPRS Support Node »), ayant essentiellement, pour les stations mobiles MS, un rôle de serveur d'accès à des services de communications mobiles en mode paquet,
- des éléments de réseau de type GGSN (« Gateway GPRS Support Node »), ayant essentiellement un rôle de routage et de connexion avec des réseaux externes ou réseaux de données en mode paquet ou PDN (« Packet Data Network »), tels que notamment des réseaux IP (« Internet Protocol »).

Les évolutions des besoins et des technologies conduisent à distinguer différents types de systèmes : des systèmes de deuxième génération, de type GSM/GPRS (où GSM est utilisé pour « Global System for Mobile communication » et GPRS est utilisé pour « General Packet Radio Service »), et des systèmes de troisième génération, de type UMTS (« Universal Mobile Telecommunication System »). Dans un système de troisième génération tel que notamment l'UMTS, les stations mobiles MS sont aussi appelées UE (« User Equipment »), le RAN est aussi appelé UTRAN (« UMTS Terrestrial Radio Access Network »), les SGSN sont aussi appelés 3G-SGSN, et les GGSN sont aussi appelés 3G-GGSN (où 3G est utilisé pour « 3^{rd} Génération »).

Pour que des données puissent être émises ou reçues pour une session de connexion en mode paquet, il est nécessaire, notamment, qu'un contexte PDP (« Packet Data Protocol ») ait été activé. Pour cela, une procédure d'activation de contexte PDP est mise en oeuvre, le but étant de définir un certain nombre de paramètres permettant de décrire la connexion en mode paquet, notamment des paramètres de routage et de QoS.

Une telle procédure est bien connue et sera seulement rappelée brièvement dans ce qui suit. Pour une description complète de cette procédure, on pourra se référer notamment à la spécification 3GPP TS 23.060.

Une requête d'activation de contexte PDP est tout d'abord transmise par la station mobile MS au SGSN auquel elle est attachée. Cette requête peut contenir certains paramètres tels que notamment un paramètre APN (« Access Point Name ») indiquant à quel réseau externe de données en mode paquet et/ou à quel service l'utilisateur souhaite se connecter, et un paramètre « QoS Requested » indiquant le profil de QoS requis. Les échanges de signalisation suivants comportent : l'envoi d'une requête correspondante par le SGSN au GGSN sélectionné pour cette connexion en mode paquet, l'envoi d'une réponse par le GGSN au SGSN, et l'envoi d'une réponse correspondante par le SGSN à la station mobile MS, cette dernière réponse mettant fin à cette procédure. Les paramètres de contexte PDP ainsi définis incluent notamment un paramètre « QoS negotiated » indiquant la QoS affectée à ce contexte, obtenue en tenant compte, notamment, du profil de QoS requis, du profil de QoS souscrit, et des resources disponibles dans le réseau.

Les mécanismes de gestion de QoS affectée à un contexte PDP, tels que rappelés précédemment, ont plutôt été conçus initialement pour des systèmes de deuxième génération, et certaines adaptations ont ensuite été prévues pour les systèmes de troisième génération, pour tenir compte, notamment, du fait que les systèmes de troisième génération doivent pouvoir supporter différents services pouvant avoir des besoins en QoS très différents les uns des autres, y compris au cours d'une même session.

On rappelle brièvement l'architecture de QoS dans un système de troisième génération tel que l'UMTS. Pour une description complète de cette architecture on pourra se référer notamment à la spécification 3GPP TS 23.107 V3.4.0; octobre 2000 ;XP002213783. On distingue différents services support tels que les services « support accès radio » ou RAB (« Radio Access Bearer ») entre UE et CN, les services « support radio » ou RB (« Radio Bearer») entre UE et UTRAN, ...etc. Pour chacun de ces services support, on distingue différents attributs de QoS tels que la classe de trafic, le débit maximal, le débit binaire garanti, le délai de transfert, ...etc. On distingue en outre quatre classes de trafic, respectivement pour des services de type conversationnel (ou « conversational »), à flux continu (ou « streaming »), interactif (ou « interactive »), ou d'arrière-plan (ou « background »). Les classes « conversational» et « streaming » sont les plus exigeantes en termes de délai de transfert ou de ressources requises ; elles sont généralement associées à des services de type temps-réel, tels que VoIP, audio, vidéo, ...etc. Les classes « interactive et « background » sont moins exigeantes en termes de délai de transfert ou de ressources requises ; elles sont généralement associées à des services de type non- temps réel, tels que des services de navigation sur le web (ou « web browsing »), courrier électronique (ou « e-mail ») ...etc.

Dans les systèmes de troisième génération, notamment de type UMTS, une procédure de modification de contexte PDP a ainsi été prévue, permettant notamment une re-négotiation de QoS en cours de session. Cette procédure ne sera pas rappelée ici de manière plus détaillée ; pour une description complète de cette procédure, on pourra se référer notamment à la spécification 3GPP TS 23.060.

La gestion de QoS affectée à un contexte PDP dons les systèmes de troisième génération, selon l'état de la technique ainsi rappelé, n'est cependant pas optimale, ainsi que l'a observé le demandeur, notamment pour les raisons suivantes, qui pour simplifier peuvent être exposées à partir d'un exemple.

Comme indiqué précédemment, les besoins en QoS peuvent varier en cours de session. Par exemple, tout en étant connecté à un fournisseur de service Internet, la session peut par exemple démarrer par une phase au cours de laquelle l'utilisateur choisit, au moyen d'un service de type interactif, un type de contenu à recevoir dans une phase suivante, par exemple au moyen d'un service de type « streaming ».

Si la QoS requise lors de l'activation de contexte PDP pour cette session correspond à la classe « streaming », alors des ressources sont inutilement réservées pour la phase interactive, pour laquelle une réservation de ressources correspondant à la classe « interactive » suffirait. A l'inverse, si la QoS requise lors de l'activation de contexte PDP correspond à la classe « interactive », alors les ressources réservées sont insuffisantes pour la phase suivante (« streaming »).

Ce problème ne peut pas être résolu simplement en activant tout d'abord un contexte PDP avec une QoS requise correspondant à la classe interactive, puis en utilisant ensuite une procédure de modification de contexte PDP, à l'initiative de la station mobile, avec une QoS requise correspondant à la classe « streaming ». En effet, l'initiative de changement de QoS vient alors de l'application client implémentée dans l'équipement terminal (ou TE, pour « Terminal Equipment ») associé à l'équipement mobile (ou ME, pour « Mobile Equipment »), alors que la QoS affectée au contexte PDP est gérée par l'équipement mobile; notamment les protocoles de communication entre TE et ME sont tels que ce changement de QoS nécessiterait alors d'activer un nouveau contexte au lieu de modifier le contexte déjà activé.

Par ailleurs, actuellement, une procédure de modification de contexte n'est effectuée à l'initiative du réseau que pour tenir compte d'un changement de ressources disponibles dans le réseau.

En d'autres termes, selon l'état de la technique ainsi rappelé, la définition de la QoS affectée à un contexte PDP n'est pas adaptée aux besoins réels, et les performances de ces systèmes ne sont donc pas optimales.

En outre, selon l'état de la technique ainsi rappelé, la notion de QoS est liée à la notion d'APN. Une meilleure définition de la QoS pourrait a priori être obtenue en multipliant le nombre d'APN par abonné, mais cela aurait pour inconvénient de rendre plus complexes les diverses opérations de mise en correspondance d'identités ou d'adresses nécessaires pour le mode paquet dans les différents noeuds du réseau (SGSN, GGSN, DNS (« Domain Name Server »), ...etc.) et/ou d'augmenter le volume de données correspondantes à stocker dans ces différents nceuds ainsi que dans les registres de type HLR (« Home Location Register ») destinés à stocker les données d'abonnement. A l'inverse, moins on prévoit d'APN différents par abonné, et plus le besoin de définir la QoS d'une manière adaptée aux besoins réels, comme exposé précédemment, se fait sentir.

WO 99/48310A décrit un système de communications mobiles dans lequel la régulation de la transmission du trafic est effectuée paquet par paquet sur la base d'une information de qualité de service contenue dans chaque paquet, sans dépasser les limites fixées par le contexte PDP.

WO 02/41592A décrit des procédés pour la gestion de la qualité de service affectée à un contexte PDP conforme au préambule de la revendication 1. Dans un de ces procédés, une qualité de service requise par un serveur d'application est communiquée par SMS à un terminal mobile qui déclenche une modification de la session active. Dans d'autres procédés préférés, la qualité de service requise par le serveur d'application est utilisée par le terminal mobile pour établir une nouvelle session PDP ayant une bande passante appropriée, en évitant une procédure de modification de contexte PDP.

La présente invention a notamment pour but d'éviter tout ou partie de ces inconvénients et/ou de résoudre tout ou partie de ces problèmes. Plus généralement, la présente invention a pour but d'améliorer la qualité de service dans ces systèmes.

Un des objets de la présente invention est un procédé pour la gestion de la qualité de service (QoS) affectée à un contexte PDP (« Packet Data Protocol ») selon la revendication 1.

Suivant une autre caractéristique, en cours de session le réseau détermine les besoins en QoS en fonction du service réellement demandé.

Suivant une autre caractéristique, en cours de session le réseau détermine les besoins en QoS par analyse de contenu transporté pour cette session.

Suivant une autre caractéristique, dans le cas d'application utilisant un protocole de type HTTP, le réseau détermine les besoins en QoS par analyse de réponse HTTP.

Suivant une autre caractéristique, ladite réponse HTTP comporte des informations additionnelles destinées à indiquer les besoins en QoS.

Suivant une autre caractéristique, en cours de session le réseau commande un changement de QoS affectée au contexte PDP, en utilisant une procédure de modification de contexte PDP.

Suivant une autre caractéristique, différents niveaux de besoins en QoS sont définis, et la QoS affectée au contexte PDP peut être changée, en cours de session, au moins une fois, lorsque les besoins en QoS changent, de l'un à l'autre de ces niveaux.

Suivant une autre caractéristique, la session est initiée avec un niveau donné de besoins en QoS.

Suivant une autre caractéristique, la session est initiée avec un bas niveau de besoins en QoS.

Suivant une autre caractéristique, un bas niveau de besoins en QoS correspond à l'une ou l'autre des classes « interactive » ou « background ».

Suivant une autre caractéristique, un haut niveau de besoins en QoS correspond à l'une ou l'autre des classes « conversational » ou « streaming».

Suivant une autre caractéristique, ledit procédé inclut en outre une adaptation dynamique de QoS affectée à un contexte PDP, en fonction du service demandé lors de l'activation de contexte PDP.

Un autre objet de la présente invention est un élément de réseau de communications mobiles selon la revendication 10 et un systéme selon la revendication 18.

Un autre objet de la présente invention est un élément de réseau de communications mobiles, comportant des moyens pour mettre en oeuvre une adaptation dynamique de QoS affectée au contexte PDP, en cours de session, en fonction des besoins en QoS pour ladite session.

Un autre objet de l'invention est un élement de réseau de communications mobiles, comportant des moyens pour déterminer, en cours de session, les besoins en QoS en fonction du service réellement demandé.

Un autre objet de l'invention est un élement de réseau de communications mobiles, comportant des moyens pour, en cours de session, déterminer les besoins en QoS par analyse de contenu transporté pour cette session.

Un autre objet de l'invention est un élement de réseau de communications mobiles, comportant, dans le cas d'application utilisant un protocole de type HTTP, des moyens pour déterminer, en cours de session, les besoins en QoS par analyse de réponse HTTP.

Un autre objet de l'invention est un élement de réseau de communications mobiles, comportant, dans le cas d'application utilisant un protocole de type HTTP, des moyens pour déterminer, en cours de session, les besoins en QoS par analyse de réponse htip comportant des informations additionnelles destinées à indiquer les besoins en QoS.

Un autre objet de l'invention est un élement de réseau de communications mobiles, comportant des moyens pour, si nécessaire, en cours de session, en fonction des besoins en QoS pour ladite session, commander un changement de QoS affectée au contexte PDP.

Un autre objet de l'invention est un élement de réseau de communications mobiles, comportant des moyens pour, si nécessaire, en cours de session, en fonction des besoins en QoS pour ladite session, commander un changement de QoS affectée au contexte PDP, en utilisant une procédure de modification de contexte PDP.

Un autre objet de la présente invention est un élément de réseau de communications mobiles, comportant des moyens pour mettre en oeuvre une adaptation dynamique de QoS affectée à un contexte PDP, en fonction du service demandé lors de l'activation de contexte PDP.

Un élement de réseau objet de la présente invention correspondant notamment à un élément de réseau de type GGSN (« Gateway GPRS Support Node »)

D'autres objets et caractéristiques de la présente invention apparaîtront à la lecture de la description suivante d'exemples de réalisation, faite en relation avec les dessins ci-annexés dans lesquels:
- la figure 1, décrite précédemment, rappelle l'architecture générale d'un système de communications mobiles en mode paquet,
- les figures 2 et 3 sont destinées à illustrer des exemples de mise en oeuvre d'un procédé suivant l'invention.

La figure 2 est destinée à illustrer un exemple de mise en oeuvre d'un procédé suivant l'invention, notamment dans un système de troisième génération de type UMTS.

On considère qu'un contexte PDP a été activé, avec une QoS donnée, dite QoS initiale. Par exemple, pour un accès à Internet, cette QoS initiale est avantageusement une QoS dite « au mieux » (ou « best effort » en anglais) c'est-à-dire correspondant à une classe de trafic telle que « interactive » ou « background ».

Les étapes de la procédure d'activation de contexte PDP sont rappelées sur la figure 2 :
- envoi par la station mobile MS au SGSN d'un message « Activate PDP Context Request »,
- établissement d'un service support d'accès radio entre station mobile MS et SGSN, ou « Radio Access Bearer Setup»,
- envoi par le SGSN au GGSN d'un message « Create PDP Context Request »,
- envoi par le GGSN au SGSN d'un message « Create PDP Context Response »,
- envoi par le SGSN à la station mobile MS d'un message « Activate PDP

Context Response ».

La QoS initiale est ensuite maintenue en cours de session, pour autant qu'il n'est pas nécessaire de la modifier.

En cours de session, des échanges se produisent au niveau de l'application (notée « APPLI » sur la figure) entre un terminal (non illustré) associé à la station mobile MS et un serveur (non illustré) tel que notamment un serveur Internet.

Par exemple, le terminal dialogue avec un serveur Internet selon le protocole HTTP (« Hyper Text Transfer Protocol »), ce dialogue incluant les échanges suivants :
- requête HTTP, notée « URL Request » (où URL est utilisé pour « Uniform Resource Locator »), transmise du terminal vers le serveur,
- réponse HTTP, notée « URL response », transmise du serveur vers le terminal.

En cours de session, un changement de QoS affectée au contexte PDP est initié si nécessaire, en fonction des besoins en QoS. Ce changement de QoS peut par exemple être initié par un analyseur de contenu (noté « Content Analyser » sur la figure) qui peut déterminer les besoins en QoS en fonction du contenu transporté par l'application. Par exemple, lorsqu'il y a un accord entre le fournisseur de contenu et le fournisseur d'accès à Internet (ce qui est le cas par exemple pour l' « i-mode »), la réponse HTTP peut transporter des informations additionnelles qui sont interprétées par l'analyseur de contenu. Il est alors possible pour l'application de requérir dynamiquement une QoS spécifique pour un URL donné, en utilisant la réponse HTTP. Tel qu'illustré sur la figure 2, l'application « APPLI » peut demander un changement de QoS initié par le message « URL response with QoS indication ».

Une commande de changement de QoS, notée « Change of QoS », peut alors être transmise par l'analyseur de contenu à une des entités concernées, notamment le GGSN. Cette commande peut par exemple indiquer tout ou partie des attributs de QoS requis. Cette commande peut par exemple indiquer seulement une classe de trafic (par exemple une des classes « conversational » ou « streaming »). Le GGSN peut, par exemple, déterminer les attributs de QoS non indiqués dans cette commande de changement de QoS.

Une procédure de modification de QoS de contexte PDP, à l'initiative du GGSN, peut ensuite être mise en oeuvre, suivant les étapes habituelles pour une telle procédure :
- envoi par le GGSN au SGSN d'un message « Update PDP Context »,
- envoi par le SGSN à la station mobile MS d'un message « Modify PDP Context Request »,
- envoi par la station mobile MS au SGSN d'un message « Modify PDP Context Response »,
- modification du service support d'accès radio entre station mobile MS et GGSN, ou « Radio Access Bearer Modification»,
- envoi par le SGSN au GGSN d'un message « Update PDP Context Response ».

Par exemple, dans l'exemple considéré dans l'introduction, une session peut être initiée avec une QoS initiale correspondant à la classe « interactive », puis en cours de session un changement de QoS peut être effectué vers une QoS correspondant à la classe « streaming ». éventuellement, on pourra ensuite revenir à la QoS initiale, puis effectuer un nouveau changement de QoS, et ceci éventuellement plusieurs fois au cours de la session.

Plus généralement, différents niveaux de besoins en QoS peuvent être définis, et la QoS affectée au contexte PDP peut être changée, en cours de session, au moins une fois, lorsque les besoins en QoS changent, de l'un à l'autre de ces niveaux.

Par exemple, la session peut être initiée avec un niveau donné de besoins en QoS, notamment un bas niveau de besoins en QoS, correspondant par exemple à l'une ou l'autre des classes « interactive » ou « background », un haut niveau de besoins en QoS correspondant par exemple à l'une ou l'autre des classes « conversational » ou « streaming ».

Suivant d'autres aspects de l'invention, la présente invention est avantageusement utilisée dans tous les cas où le nombre d'APN par abonné ne permet pas d'obtenir une définition suffisamment fine de la QoS requise. Un cas extrême est le cas où un seul APN est prévu par abonné, cet APN étant aussi appelé « APN virtuel », et un « APN réel » étant associé dynamiquement à cet APN virtuel, en fonction du service réellement demandé par l'utilisateur, lors de l'activation de contexte PDP.

Des indications sur le service réellement demandé peuvent par exemple être transmises au GGSN au moyen du paramètre PCO (« PDP Configuration Options ») transmis par la station mobile dans le message « Activate PDP Context Request », et envoyé au GGSN de manière transparente au SGSN. Le GGSN peut alors, sur la base de ces indications, ainsi que sur la base d'autres indications habituellement utilisées par le GGSN (relatives notamment à l'identité de l'utilisateur et aux abonnements souscrits) déterminer l'APN réel à utiliser pour la suite de la procédure d'activation de contexte PDP.

La QoS ainsi initiée est alors maintenue en cours de session, pour autant qu'il n'est pas nécessaire de la modifier, et un changement de QoS est ensuite initié en cours de session, si nécessaire, comme décrit plus haut.

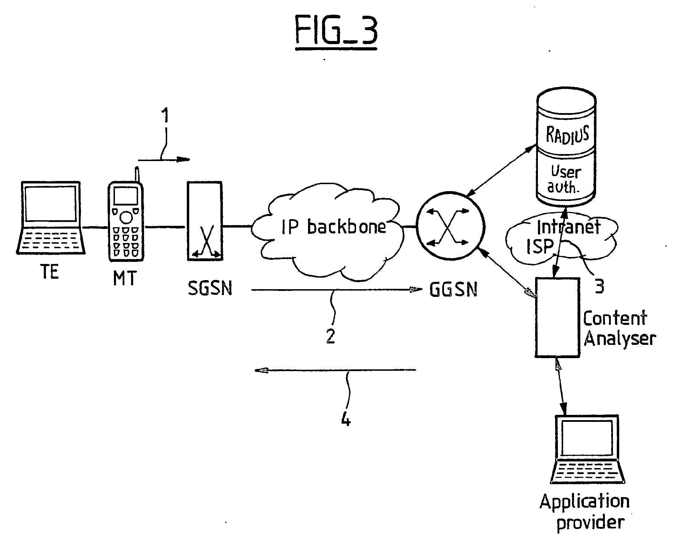

La figure 3 est destinée à illustrer un exemple de système dans lequel la QoS de contexte PDP est adaptée dynamiquement, en fonction du service réellement demandé, aussi bien lors de l'activation de contexte qu'en cours de session, et les principaux traitements et échanges entre éléments d'un tel système.

Sur la figure 3 sont illustrés :
- un terminal mobile noté MT (« Mobile Termination ») et un terminal de données associé noté TE (« Terminal Equipment »),
- un élément de réseau de type SGSN et un élément de réseau de type GGSN reliés entre eux de manière habituelle par un réseau interne en mode paquet noté « IP Backbone »,
- un fournisseur d'application, noté « Application Provider », auquel le terminal mobile se connecte via un réseau de données externe noté « Intranet/ISP » (où ISP est utilsé pour « Internet Service Provider »),
- un analyseur de contenu, noté « Content Analyser », analysant le contenu fourni par l'équipement «Application Provider » pour déterminer les besoins en QoS en cours de session, et transmettre si nécessaire une commande de changement de QoS au GGSN. Une telle commande de changement de QoS peut par exemple être transportée suivant le protocole RADIUS (« Remote Authentication Dial-In user Service »).

Un procédé suivant l'invention mis en oeuvre dans un tel système comporte par exemple les étapes suivantes, pour la configuration d'APN, c'est-à-dire pour associer dynamiquement un APN réel à un APN virtuel, en fonction du service réellement demandé par l'utilisateur, lors de l'activation de contexte PDP :
- étape notée 1 correspondant à l'envoi par le terminal mobile MT au SGSN d'un message « Activate PDP Context Request », ce message pouvant notamment inclure le type de service requis (par exemple dans le paramètre PCO),
- étape notée 2 correspondant à l'envoi par le SGSN au GGSN d'un message correspondant « Create PDP Context »,
- étape correspondant à une configuration d'APN par le GGSN, comme décrit précédemment.

Un procédé suivant l'invention mis en oeuvre dans un tel système comporte par exemple les étapes suivantes, pour l'adaptation dynamique de la QoS de contexte PDP en cours de session, en fonction du service réellement demandé par l'utilisateur, c'est-à-dire en fonction des besoins en QoS :
- étape notée 3 correspondant à l'envoi par l'analyseur de contenu au SGSN, d'une commande de changement de QoS,
- étape notée 4 correspondant à l'envoi par le GGSN au SGSN d'un message « Update PDP Contexte Request ».

Plus généralement, une adaptation dynamique de QoS affectée au contexte PDP est prévue, en cours de session, en fonction des besoins en QoS pour ladite session.

Avantageusement, ladite adaptation dynamique est effectuée à l'initiative du réseau.

Avantageusement, en cours de session le réseau commande un changement de QoS affectée au contexte PDP, en utilisant une procédure de modification de contexte PDP.

Avantageusement le réseau détermine les besoins en QoS, par exemple en fonction du service réellement demandé, ou par analyse de contenu transporté pour cette session, ou par analyse de réponse HTTP, ou par tout autre moyen.

La présente invention a également pour objet un élément de réseau de communications mobiles (tel que notamment un élément de réseau de type GGSN), et un système de communications mobiles, comportant des moyens pour mettre en oeuvre un procédé suivant l'invention.

Suivant un exemple un élément de réseau comporte des moyens pour, en cours de session, déterminer les besoins en QoS par analyse de contenu transporté pour cette session.

Suivant un exemple un élément de réseau comporte, dans le cas d'application utilisant un protocole de type HTTP, des moyens pour déterminer, en cours de session, les besoins en QoS par analyse de réponse HTTP.

Suivant un exemple un élément de réseau comporte, dans le cas d'application utilisant un protocole de type HTTP, des moyens pour déterminer, en cours de session, les besoins en QoS par analyse de réponse HTTP. comportant des informations additionnelles destinées à indiquer les besoins en QoS.

Suivant un exemple un élément de réseau comporte des moyens pour, si nécessaire, en cours de session, en fonction des besoins en QoS pour ladite session, commander un changement de QoS affectée au contexte PDP.

Suivant un exemple un élément de réseau comporte des moyens pour, si nécessaire, en cours de session, en fonction des besoins en QoS pour ladite session, commander un changement de QoS affectée au contexte PDP, en utilisant une procédure de modification de contexte PDP.Suivant un exemple, un élément de réseau comporte des moyens pour mettre en oeuvre une adaptation dynamique de QoS affectée à un contexte PDP, en fonction du service demandé lors de l'activation de contexte PDP.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour la gestion de la qualité de service QoS affectée à un contexte PDP « Packet Data Protocol » pour une session de connexion en mode paquet entre une station mobile (MS) et un réseau dans un système de communications mobiles, ledit procédé incluant une adaptation dynamique de QoS en cours de session, **caractérisé par le fait que** au cours d'une session utilisant un protocole de type HTTP, le réseau détermine des besoins en QoS pour ladite session par analyse d'une réponse HTTP et commande l'adaptation dynamique de la qualité de service QoS affectée audit contexte PDP en fonction desdits besoins en QoS.

2. Procédé selon la revendication 1, dans lequel ladite réponse HTTP, comporte des informations additionnelles destinées à indiquer les besoins en QoS.

3. Procédé selon l'une des revendications 1 à 2, dans lequel en cours de session le réseau commande un changement de la qualité de service QoS affectée au contexte PDP, en utilisant une procédure de modification de contexte PDP.

4. Procédé selon l'une des revendications 1 à 3, dans lequel différents niveaux de besoins en QoS sont définis, et la qualité de service QoS affectée au contexte PDP peut être changée, en cours de session, au moins une fois, lorsque les besoins en QoS changent, de l'un à l'autre de ces niveaux.

5. Procédé selon la revendication 4, dans lequel la session est initiée avec un niveau donné de besoins en QoS.

6. Procédé selon l'une des revendications 4 et 5, dans lequel la session est initiée avec un bas niveau de besoins en QoS.

7. Procédé selon l'une des revendications 4 à 6, dans lequel un bas niveau de besoins en QoS correspond à l'une ou l'autre des classes « interactive » ou « background ».

8. Procédé selon l'une des revendications 4 à 7, dans lequel un haut niveau de besoins en QoS correspond à l'une ou l'autre des classes « conversational » ou « streaming».

9. Procédé selon l'une des revendications 1 à 8, incluant en outre une adaptation dynamique de QoS affectée à un contexte PDP, en fonction du service demandé lors de l'activation de contexte PDP.

10. Elément de réseau de communications mobiles comportant des moyens pour commander une adaptation dynamique de la qualité de service QoS affectée à un contexte PDP pour une session de connexion en mode paquet avec une station mobile (MS), en cours de session, **caractérisé par le fait qu'**il comporte des moyens d'analyse pour déterminer, au cours d'une session utilisant un protocole de type HTTP, des besoins en QoS pour ladite session par analyse d'une réponse HTTP et des moyens de commande pour commander l'adaptation dynamique de la qualité de service QoS affectée audit contexte PDP en fonction desdits besoins en QoS.

11. Element de réseau selon la revendication 10, **caractérisé par le fait que** lesdits moyens d'analyse sont aptes à déterminer, en cours de session, les besoins en QoS par analyse d'une réponse HTTP comportant des informations additionnelles destinées à indiquer les besoins en QoS.

12. Elément de réseau selon la revendication 10 ou 11, **caractérisé par le fait qu'**il comporte un analyseur de contenu.

13. Elément de réseau selon l'une des revendications 10 à 12, **caractérisé par le fait qu'**il est apte à transmettre une commande de changement de la qualité de service QoS affectée au contexte PDP à destination d'un élément de réseau de type GGSN « Gateway GPRS Support Node ».

14. Elément de réseau selon l'une des revendications 10 à 13, **caractérisé par le fait qu'**il est apte à transmettre une commande de changement de la qualité de service QoS affectée au contexte PDP suivant le protocole RADIUS.

15. Elément de réseau selon l'une des revendications 10 à 14, **caractérisé par le fait que** lesdits moyens de commande sont aptes à commander un changement de la qualité de service QoS affectée au contexte PDP, en utilisant une procédure de modification de contexte PDP.

16. Elément de réseau selon l'une des revendications 10 à 15, comportant des moyens pour mettre en oeuvre une adaptation dynamique de la qualité de service QoS affectée à un contexte PDP, en fonction du service demandé lors de l'activation de contexte PDP.

17. Elément de réseau selon l'une des revendications 10 à 16, correspondant à un élément de réseau de type GGSN « Gateway GPRS Support Node ».

18. Système de communications mobiles comportant des moyens pour commander une adaptation dynamique de la qualité de service QoS affectée à un contexte PDP pour une session de connexion en mode paquet avec une station mobile (MS), en cours de session, **caractérisé par le fait qu'**il comporte des moyens d'analyse pour déterminer, au cours d'une session utilisant un protocole de type HTTP, des besoins en QoS pour ladite session par analyse d'une réponse HTTP et des moyens de commande pour commander l'adaptation dynamique de la qualité de service QoS affectée audit contexte PDP en fonction desdits besoins en QoS.

19. Système selon la revendication 18, **caractérisé par le fait que** lesdits moyens de commande sont aptes à commander un changement de QoS affectée au contexte PDP, en utilisant une procédure de modification de contexte PDP.

## Claims

1. A method of managing the quality of service QoS assigned to a packet data protocol PDP context for a packet mode connection session between a mobile station (MS) and a network in a mobile communications system, said method including dynamic QoS adaptation during the session, **characterized by** the fact that during the session using an HTTP type protocol, the network determines the QoS requirements for said session by HTTP response analysis and commands the dynamic quality of service QoS adaptation assigned to said PDP context as a function of said QoS requirements.

2. A method according to claim 1, wherein said HTTP response comprises additional information intended to indicate the QoS requirements.

3. A method according to any one of claims 1 to 2, wherein, the network commands a change of the QoS assigned to the PDP context during a session using a PDP context modification procedure.

4. A method according to any one of claims 1 to 3, wherein different levels of QoS requirements are defined and the QoS assigned to the PDP context may be changed at least once during a session if the QoS requirements change from one to the other of said levels.

5. A method according to claim 4, wherein the session is initiated with a given level of QoS requirements.

6. A method according to either claim 4 or claim 5, wherein the session is initiated with a low level of QoS requirements.

7. A method according to any one of claims 4 to 6, wherein a low level of QoS requirements corresponds to either the interactive class or the background class.

8. A method according to any one of claims 4 to 7, wherein a high level of QoS requirements corresponds to either the conversational class or the streaming class.

9. A method according to any one of claims 1 to 8, further comprising dynamic adaptation of the QoS assigned to a PDP context as a function of the service requested at PDP context activation time.

10. A mobile communications network element comprising means for commanding a dynamic quality of service QoS adaptation assigned to a PDP context for a connection session in packet mode with a mobile station (MS), during the session, **characterized by** the fact that it comprises analysis means for determining, during a session using an HTTP type protocol, the QoS requirements for said session by HTTP response analysis and command means for commanding the dynamic quality of service QoS adaptation assigned to said PDP context as a function of said QoS requirements.

11. A network element according to claim 10, **characterized by** the fact that said analysis means are suitable for determining, during the session, the QoS requirements by HTTP response analysis comprising additional information intended to indicate the QoS requirements.

12. A network element according to claim 10 or claim 11, **characterized by** the fact that it includes a content analyzer.

13. A network element according to any one of claims 10 to 12, **characterized by** the fact that it is suitable for transmitting a command for changing the quality of service QoS assigned to the PDP context to a gateway GPRS support node (GGSN) type network element.

14. A network element according to any one of claims 10 to 13, **characterized by** the fact that it is suitable for transmitting a command for changing the quality of service QoS assigned to the PDP context following the RADIUS protocol.

15. A network element according to any one of claims 10 to 14, **characterized by** the fact that said command means are suitable for commanding a change in the quality of service QoS assigned to the PDP context, using a PDP context modification procedure.

16. A network element according to any one of claims 10 to 15, comprising means for dynamic adaptation of the quality of service QoS assigned to a PDP context as a function of the service requested at the time of PDP context activation.

17. A network element according to any one of claims 10 to 16 corresponding to a gateway GPRS support node (GGSN) type network element.

18. A mobile communications system comprising means for commanding a dynamic quality of service QoS adaptation assigned to a PDP context for a connection session in packet mode with a mobile station (MS), during the session, **characterized by** the fact that it comprises analysis means for determining, during a session using an HTTP type protocol, the QoS requirements for said session by HTTP response analysis and command means for commanding the dynamic quality of service QoS adaptation assigned to said PDP context as a function of said QoS requirements.

19. A mobile communications system according to claim 18, **characterized by** the fact that said command means are suitable for commanding a change of the QoS assigned to the PDP context, using a PDP context modification procedure.

## Patentansprüche

1. Verfahren zur Verwaltung der Dienstgüte (QoS), welche einem PDP-"Packet Data protocol"-Kontext für eine Verbindungssitzung im Paket-Modus zwischen einer Mobilstation (MS) und einem Netz innerhalb eines mobilen Kommunikationssystems zugeordnet ist, wobei das besagte Verfahren eine dynamische Anpassung der QoS während der Sitzung umfasst, **dadurch gekennzeichnet, dass** während einer Sitzung, welche ein Protokoll vom Typ HTTP benutzt, das Netz den Bedarf an QoS für die besagte Sitzung durch Analyse einer HTTP-Antwort bestimmt und die dynamische Anpassung der dem besagten PDP-Kontext entsprechend dem besagten Bedarf an QoS zugeordnet Dienstgüte QoS steuert.

2. Verfahren nach Anspruch 1, wobei die besagte HTTP-Antwort zusätzliche Informationen, welche dazu bestimmt sind, den Bedarf an QoS anzugeben, enthält.

3. Verfahren nach einem der Ansprüche 1 bis 2, wobei das Netz während der Sitzung eine Änderung der dem PDP-Kontext zugewiesenen Dienstgüte QoS unter Anwendung eines Verfahrens zur Änderung des PDP-Kontextes steuert.

4. Verfahren nach einem der Ansprüche 1 bis 3, wobei verschiedene Stufen des Bedarfs an QoS definiert werden und die dem PDP-Kontext zugeordnete Dienstgüte QoS während der Sitzung mindestens ein Mal von einer Stufe in eine andere dieser Stufen verändert werden kann, wenn sich der Bedarf an QoS ändert.

5. Verfahren nach Anspruch 4, wobei die Sitzung mit einer gegebenen Stufe des Bedarfs an QoS initiiert wird.

6. Verfahren nach einem der Ansprüche 4 und 5, wobei die Sitzung mit einer niedrigen Stufe des Bedarfs an QoS initiiert wird.

7. Verfahren nach einem der Ansprüche 4 bis 6, wobei eine niedrige Stufe des Bedarfs an QoS der einen oder anderen der Klassen "interaktiv" oder "Background" entspricht.

8. Verfahren nach einem der Ansprüche 4 bis 7, wobei eine hohe Stufe des Bedarfs an QoS der einen oder anderen der Klassen "conversational" oder "streaming" entspricht.

9. Verfahren nach einem der Ansprüche 1 bis 8, welches zusätzlich eine einem PDP-Kontext zugeordnete dynamische Anpassung der QoS entsprechend dem bei der Aktivierung des PDP-Kontextes angeforderten Dienst umfasst.

10. Element eines mobilen Kommunikationsnetzes mit Mitteln zur Steuerung einer dynamischen Anpassung der einem PDP-Kontext für eine Verbindungssitzung im Paketmodus mit einer Mobilstation (MS) während der Sitzung zugewiesenen Dienstgüte QoS, **dadurch gekennzeichnet, dass** es Analysemittel zur Bestimmung, während einer Sitzung, welche ein Protokoll vom Typ HTTP benutzt, des Bedarfs an QoS für die Sitzung anhand der Analyse einer HTTP-Antwort sowie Mittel zur Steuerung der dynamischen Anpassung der dem besagten PDP-Kontext entsprechend dem besagten Bedarf an Dienstgüte QoS zugewiesenen Dienstgüte QoS umfasst.

11. Netzelement nach Anspruch 10, **dadurch gekennzeichnet, dass** die besagten Analysemittel fähig sind, während der Sitzung den Bedarf an QoS durch Analyse einer HTTP-Antwort, welche zusätzliche Informationen zur Angabe des Bedarfs an QoS enthält, zu bestimmen.

12. Netzelement nach Anspruch 10 oder 11, **dadurch gekennzeichnet, dass** es eine Vorrichtung zur Analyse des Inhalts umfasst.

13. Netzelement nach einem der Ansprüche 10 bis 12, **dadurch gekennzeichnet, dass** es fähig ist, einen Befehl zum Ändern der dem PDP-Kontext zugewiesenen Dienstgüte QoS an ein Netzelement vom Typ GGSN "Gateway GPRS Support Node" zu senden.

14. Netzelement nach einem der Ansprüche 10 bis 13, **dadurch gekennzeichnet, dass** es fähig ist, einen Befehl zum Ändern der dem PDP-Kontext zugewiesenen Dienstgüte QoS entsprechend dem RADIUS-Protokoll zu senden.

15. Netzelement nach einem der Ansprüche 10 bis 14, **dadurch gekennzeichnet, dass** die besagten Steuerungsmittel fähig sind, eine Änderung der dem PDP-Kontext zugewiesenen Dienstgüte QoS unter Anwendung einer Prozedur zur Änderung des PDP-Kontextes zu steuern.

16. Netzelement nach einem der Ansprüche 10 bis 15, welches Mittel zum Ausführen einer dynamischen Anpassung der einem PDP-Kontext zugewiesenen Dienstgüte QoS entsprechend dem bei der Aktivierung des PDP-Kontextes angeforderten Dienst umfasst.

17. Netzelement nach einem der Ansprüche 10 bis 16, welches einem Netzelement vom Typ GGSN "Gateway GPRS Support Node" entspricht.

18. Mobiles Kommunikationssystem, welches Mittel zur Steuerung einer dynamischen Anpassung der einem PDP-Kontext für eine Verbindungssitzung im Paketmodus mit einer Mobilstation (MS) während einer Sitzung zugewiesenen Dienstgüte QoS enthält, **dadurch gekennzeichnet, dass** es Analysemittel zur Bestimmung, während einer Sitzung, welche ein Protokoll vom Typ HTTP benutzt, des Bedarfs an QoS für die besagte Sitzung anhand der Analyse einer HTTP-Antwort, sowie Mittel zur Steuerung der dynamischen Anpassung der dem PDP-Kontext zugewiesenen Dienstgünste QoS entsprechend dem besagten Bedarf en QoS umfasst.

19. System nach Anspruch 18, **dadurch gekennzeichnet, dass** die besagten Steuerungsmittel fähig sind, eine Änderung der dem PDP-Kontext zugeordneten QoS anhand einer Prozedur zur Änderung des PDP-Kontextes zu steuern.
